# EUROPÄISCHE PATENTSCHRIFT

(11) **EP 3 328 196 B1**
(45) Veröffentlichungstag und Bekanntmachung des Hinweises auf die Patenterteilung: **25.03.2020**
(21) Anmeldenummer: 16756569.6
(22) Anmeldetag: 19.07.2016
(51) Int. Cl.: A01N 25/30, A01P 17/00

(54) **MITTEL ZUR SCHNECKEN- UND SCHNEGELABWEHR**
AGENT FOR REPELLING SNAILS AND SLUGS
RÉPULSIF POUR ESCARGOTS ET LIMACES

(30) Priorität: 05.01.2016 DE 102016100162
(43) Veröffentlichungstag der Anmeldung: 06.06.2018
(73) Patentinhaber: Solvoluta GmbH, 24118 Kiel (DE)
(72) Erfinder: SYDOW, Nadine, 24118 Kiel (DE); RIEDL, Marten, 24814 Sehestedt (DE)
(74) Vertreter: Lobemeier, Martin Landolf
(86) Internationale Anmeldenummer: PCT/DE2016/100326
(87) Internationale Veröffentlichungsnummer: WO 2017/118448

(56) Entgegenhaltungen:
- EP-A1- 0 891 711
- EP-A2- 0 259 249
- WO-A1-2014/067663
- WO-A1-2014/135606
- DE-A1- 3 342 529
- DATABASE STN CHEMICAL ABSTRACTS, X [Online] 19. Dezember 1994 (1994-12-19), TZENG D D S ET AL: "Sodium dodecyl sulfate as an alternative agent for the control of golden apple snail Pomacea canaliculata (Lamarck) in rice fields", XP002049717, gefunden im CHEMICAL Database accession no. 295043
- TARAZONA JOSE V ET AL: "Acute toxicity of synthetic detergents to snails: effect of sodium lauryl sulfate on Limnaea peregra shells", BULLETIN OF ENVIRONMENTAL CONTAMINATION AND TOXICOLOGY, SPRINGER VERLAG, NEW YORK, NY, US, Bd. 39, Nr. 6, 1. Januar 1987 (1987-01-01) , Seiten 1036-1040, XP009192030, ISSN: 0007-4861, DOI: 10.1007/BF01689595

## Beschreibung

Die Erfindung betrifft ein Mittel zur Schnecken- und Schnegelabwehr.

In Gartenkulturen können Schnecken große Fressschäden anrichten, sodass eine Vielzahl von Bekämpfungsmethoden bekannt ist, die sich hauptsächlich gegen die Spanische Wegschnecke (*Arion vulgaris*), die rote Wegschnecke (*Arion rufus*) und gegen zu den Schnegeln (*Limacidae*) gehörende Nacktschneckenvertreter richten.

Wenngleich ursprüngliche Arten der Nacktschnecken als Verwerter abgestorbenen Pflanzenmaterials gelten, hat sich insbesondere *Arion vulgaris* sich im kühl-feuchten Deutschland zur häufigsten unter den Schnecken als Schädling bekannten Art entwickelt und auf frisches Grün angepasst.

So kann auch beobachtet werden, dass moderne Vertreter der besonders anpassungsfähigen Art *Arion vulgaris* sehr austrocknungsresistent sind - eine durch Selektion erworbene Eigenschaft, die vermutlich auf den fast ausschließlichen Gebrauch zu deren Bekämpfung verwendeter salzhaltiger Streupräparate zurückzuführen ist.

Der Nachteil von Streupräparaten, z. B. mit Methiocarb oder Eisen-III-Phosphat als Wirkstoff, ist, dass diese auf die Nacktschnecken anlockend wirken und die Böden und das Grundwasser belasten. Außerdem werden durch diese generell toxischen Substanzen nicht nur Schnecken, sondern auch deren natürlichen Fressfeinde dezimiert, sodass die Ausbreitung einer Schneckenplage unter Umständen sogar begünstigt werden kann.

Andererseits ist der Schutz von Nutzpflanzen notwendig, da die evolutiven Abwehrmechanismen (Bitterstoffe, derbe Blätter, Stacheln o.ä.) der Kulturpflanzen zugunsten anderer pflanzlicher Eigenschaften größtenteils weggezüchtet wurden und sie nunmehr gegenüber Schnecken schutzlos geworden sind.

Tseng et al. (Life Sci 1994, 18(3): 138-45) sowie Tarazona (Bull. Environ Contam. Toxicol. 1987, 39: 1036-1040) offenbaren die toxische Wirkung von anionischen Tensiden auf Schnecken.

Die rein mechanische Abwehr von Schnecken hat gegenüber chemischen Methoden den Vorteil, dass die Umwelt nicht belastet werden und die ökologische Funktion der Gastropoden erhalten bleibt.

Jedoch bieten mechanische Schutzzäune aus Kupfer oder gewinkelten Überhängen nur einen unzureichenden Schutz vor Nacktschnecken wie *A. vulgaris,* da diese sich mit einem äußerst klebrigen Sekret an Strukturen aller Art anpassen kann.

Aufgabe der Erfindung ist es daher, ein wirkungsvolles Mittel zur Schnecken- und Schnegelabwehr zu schaffen, dass für Gastropoden nichttoxisch und dessen Verwendung insgesamt ökologisch unbedenklich ist.

Diese Aufgabe wird erfindungsgemäß durch das Mittel zur Schnecken- und Schnegelabwehr mit den Merkmalen von Anspruch 1 gelöst. Die Unteransprüche geben vorteilhafte Ausgestaltungen der Erfindung wieder.

Grundgedanke der Erfindung ist es, ein Mittel für die Modifizierung von Oberflächen bereitzustellen, sodass Schnecken an den modifizierten Oberflächen keine Haftung haben und die Objekte nicht betreten oder von den Objekten herabfallen.

Das erfindungsgemäß verwendete Mittel zur Schnecken- und Schnegelabwehr weist eine Kombination aus einem anionischen, einem nichtionischen und einem amphoteren Tensid gemäß Anspruch 1 auf. Anders ausgedrückt wird die Verwendung einer Kombination aus einem anionischen, einem nichtionischen und einem amphoteren Tensid zur Schnecken- und Schnegelabwehr vorgeschlagen.

Die Haftung von Nacktschnecken an ihrem Untergrund wird durch das von ihnen abgegebene Sekret vermittelt, wobei lubrikanter Kriechschleim von adhäsivem Klebschleim unterschieden werden kann (vgl. "The effect of molluscan glue proteins on gel mechanics", Pawlicki et al, 2004, J Exp Biol 207, 1127-1135). Die Zusammensetzung von Kriechschleim und Klebschleim besteht hauptsächlich in der An- bzw. Abwesenheit von bestimmten "Klebproteinen", die bei Luftkontakt sofort oxidieren und ihre adhäsive Wirkung entfalten.

Die Wirkung des erfindungsgemäß verwendeten Mittels besteht vermutlich darin, dass das Mittel mit Hilfe ionischer Wechselwirkungen die Funktion der "Klebproteine" vermindert oder zerstört.

Das Mittel zur Schnecken- und Schnegelabwehr weist als anionisches Tensid bevorzugt ein Alkylcarboxylat, ein n-Alkylsulfat, ein sekundäres Alkylsulfat, ein Alkansulfonat, ein sekundäres Alkansulfonat oder ein Alkylbenzolsulfonat auf.

Als nichtionisches Tensid weist das Mittel zur Schnecken- und Schnegelabwehr bevorzugt einen Polyalkylenglykolether, ein Fettalkoholpropoxylat, ein Alkylglucosid, ein Alkylpolyglucosid, ein Oktylphenolethoxylat oder ein Nonylphenolethoxylat auf.

Das Mittel zur Schnecken- und Schnegelabwehr weist als amphoteres Tensid bevorzugt ein Betain oder ein Sultain auf.

Da der Anteil energiereicher ultravioletter Strahlung des Sonnenlichtes im Bereich von 290 bis 400 nm die Wirkung des Mittels verringern kann, ist bevorzugt vorgesehen, dass das Mittel zur Schnecken- und Schnegelabwehr ein UV-Licht absorbierendes Pigment aufweist.

Besonders bevorzugt ist ein Pigmentanteil von 1 bis 6 Gewichtsprozent (bezogen auf das Gesamtgemisch) vorgesehen.

Höchst bevorzugt ist ein Anteil von 5 Gewichts-% von Pigmenten vorgesehen, die UVA und UVB Strahlung absorbieren.

Es hat sich herausgestellt, dass Oberflächen mit amphiphilen Eigenschaften eine Anpassung des Schneckensekretes wirkungsvoll verhindern, sodass eine Abwehrbeschichtung in der Vertikalen eine für Schnecken unüberwindbare Hürde darstellt, wenn eine Schnecke auf eine derartige Oberfläche gesetzt wird.

Mit Hilfe des beanspruchten Mittels können *"amphiphile"* Oberflächen geschaffen werden, bei denen wasseranziehende und -abstoßende Domänen in enger Nachbarschaft auftreten.

Erst die Kombination von anionischen, nichtionischen und amphoteren Tensid(rest)en sind gegen alle gängigen Schnecken- und Schnegelarten Deutschlands, inkl. *Arion vulgaris,* wirksam. Bei Verzicht von einzelnen Komponenten kann es auch zu Vermeidungsverhalten oder Haftverhinderung für vereinzelte Schneckenarten kommen, Haftverhinderung wird aber erst durch die kombinierten Tensidladungen erreicht.

Darüber hinaus hat sich gezeigt, dass das Vorsehen eines nichtionischen Tensids die für die Verarbeitung und Anwendung des Mittels/Beschichtungsmittels hinreichend erforderliche Konsistenz des Mittels/Beschichtungsmittels und das Vorsehen eines amphoteren Tensids die Abwehrwirkung des Mittels/Beschichtungsmittels verbessert.

Das erfindungsgemäße Gewichtsverhältnis von anionischem Tensid zu nichtionischem Tensid zu amphoterem Tensid im Bereich von (0,2 bis 2,2) : (0,1 bis 1,5) : (0,1 bis 2,2) hat sich als vorteilhaft herausgestellt. Ganz besonders bevorzugt beträgt das Gewichtsverhältnis der Tenside zueinander 1:1:1.

Auf kationische Tenside wird grundsätzlich verzichtet, da diese besonders lange Halbwertzeiten in der Nahrungskette haben und von daher als "schwer abbaubar" zu werten sind.

Insbesondere weist das Beschichtungsmittel eine das Mittel zur Schnecken- und Schnegelabwehr aufnehmende Matrix auf. Der Anteil der Tenside an dem Beschichtungsmittel bzw. der Beschichtung ist bevorzugt geringer als 50 %. Besonders bevorzugt beträgt das Gewichtsverhältnis von Matrix zu Tensiden zwischen 0,7:0,3 und 0,9:0,1.

Die Matrix ist speziell ein Öl bzw. ölbasiert. Besonders bevorzugt ist die Matrix ein Öllack.

Die ölbasierte Matrix trägt entscheidend zur Wetterbeständigkeit der Beschichtung bei: würde anstelle des Öllacks ein Acrylat, Silikon oder ein Epoxid verwendet werden, kann der

Haftverhinderungseffekt zwar auch erreicht werden - dieser verschwindet aber nach dem ersten Kontakt mit Wasser bzw. Niederschlag, da die Beschichtung abgewaschen wird.

Schließlich wird auch ein Objekt mit einer das Mittel zur Schnecken- und Schnegelabwehr aufweisenden, mit dem Beschichtungsmittel erzeugten Beschichtung beansprucht. Das Objekt ist insbesondere ein Schneckenzaun, ein Schneckenkragen, eine Beeteinfassung, ein Rasenkantenelement, ein Pflanzkübel, ein Kompostgefäß oder ein Blumentopf.

## Patentansprüche

1. Verwendung einer für Gastropoden nichttoxischen Kombination aus einem anionischen, einem nichtionischen und einem amphoteren Tensid, in einem Gewichtsverhältnis von 0,2 bis 2,2 anionisches Tensid zu 0,1 bis 1,5 nichtionisches Tensid zu 0,1 bis 2,2 amphoteres Tensid, als Mittel zur Schnecken- und Schnegelabwehr.

2. Verwendung nach Anspruch 1, **dadurch gekennzeichnet, dass** das anionische Tensid ausgewählt ist aus der Gruppe von anionischen Tensiden bestehend aus Alkylcarboxylaten, n-Alkylsulfaten, sekundären Alkylsulfaten, Alkansulfonaten, sekundären Alkansulfonaten und Alkylbenzolsulfonaten.

3. Verwendung nach einem der vorhergehenden Ansprüche, **dadurch gekennzeichnet, dass** das nichtionische Tensid ausgewählt ist aus der Gruppe von nichtionischen Tensiden bestehend aus Polyalkylenglykolether, Fettalkoholpropoxylaten, Alkylglucosiden, Alkylpolyglucosiden, Oktylphenolethoxylaten und Nonylphenolethoxylaten.

4. Verwendung nach einem der vorhergehenden Ansprüche, **dadurch gekennzeichnet, dass** das amphotere Tensid ausgewählt ist aus der Gruppe von amphoteren Tensiden bestehend aus Betainen und Sultainen.

5. Verwendung nach einem der vorhergehenden Ansprüche, **dadurch gekennzeichnet, dass** das Mittel ein UV-Licht absorbierendes Pigment aufweist.

6. Verwendung des Mittels nach einem der vorhergehenden Ansprüche als Beschichtungsmittel, **gekennzeichnet durch** eine das Mittel zur Schnecken- und Schnegelabwehr aufnehmende Matrix.

7. Verwendung nach Anspruch 6, **dadurch gekennzeichnet, dass** die Matrix ölbasiert ist.

8. Verwendung nach einem der Ansprüche 7, **dadurch gekennzeichnet, dass** die Matrix ein Öllack ist.

9. Objekt mit einer eine für Gastropoden nichttoxischen Kombination aus einem anionischen, einem nichtionischen und einem amphoteren Tensid in einem Gewichtsverhältnis von 0,2 bis 2,2 anionisches Tensid zu 0,1 bis 1,5 nichtionisches Tensid zu 0,1 bis 2,2 amphoteres Tensid aufweisenden Beschichtung zur Schnecken- und Schnegelabwehr.

10. Objekt nach Anspruch 9, **dadurch gekennzeichnet, dass** das Objekt ein Schneckenzaun, ein Schneckenkragen, eine Beeteinfassung, ein Rasenkantenelement, ein Pflanzkübel, ein Kompostgefäß oder ein Blumentopf ist.

## Claims

1. Use of a combination of an anionic, a nonionic and an amphoteric surfactant which is non-toxic for gastropods, in a weight ratio of 0.2 to 2.2 anionic surfactant to 0.1 to 1.5 nonionic surfactant to 0.1 to 2.2 amphoteric surfactant, as an agent for repelling snails and slugs.

2. Use according to claim 1, **characterized in that** the anionic surfactant is selected from the group of anionic surfactants consisting of alkyl carboxylates, n-alkyl sulfates, secondary alkyl sulfates, alkanesulfonates, secondary alkanesulfonates and alkylbenzene sulfonates.

3. Use according to either of the preceding claims, **characterized in that** the nonionic surfactant is selected from the group of nonionic surfactants consisting of polyalkylene glycol ethers, fatty alcohol propoxylates, alkyl glucosides, alkyl polyglucosides, octylphenol ethoxylates and nonylphenol ethoxylates.

4. Use according to any of the preceding claims, **characterized in that** the amphoteric surfactant is selected from the group of amphoteric surfactants consisting of betaines and sultaines.

5. Use according to any of the preceding claims, **characterized in that** the agent comprises a pigment that absorbs UV light.

6. Use of the agent according to any of the preceding claims as a coating agent, **characterized by** a matrix containing the agent for repelling snails and slugs.

7. Use according to claim 6, **characterized in that** the matrix is oil-based.

8. Use according to any of claims 7, **characterized in that** the matrix is an oil varnish.

9. Object having a coating containing a combination of an anionic, a nonionic and an amphoteric surfactant which is non-toxic for gastropods, in a weight ratio of 0.2 to 2.2 anionic surfactant to 0.1 to 1.5 nonionic surfactant to 0.1 to 2.2 amphoteric surfactant, for repelling snails and slugs.

10. Object according to claim 9, **characterized in that** the object is a snail fence, a slug collar, a bed edging, a lawn edge element, a planter, a compost container or a flower pot.

## Revendications

1. Utilisation d'une combinaison de tensioactifs anionique, non ionique et amphotère non toxique pour des gastéropodes, dans un rapport en poids de 0,2 à 2,2 de tensioactif anionique à 0,1 à 1,5 de tensioactif non ionique à 0,1 à 2,2 de tensioactif amphotère, pour repousser les escargots et les limaces.

2. Utilisation selon la revendication 1, **caractérisée en ce que** le tensioactif anionique est choisi dans le groupe constitué par les tensioactifs anioniques comprenant des carboxylates d'alkyl, des sulfates de n-alkyl, des sulfates d'alkyl secondaires, des alcanesulfonates, des alcanesulfonates secondaires et des alkylbenzènesulfonates.

3. Utilisation selon l'une des revendications précédentes, **caractérisée en ce que** le tensioactif non ionique est choisi dans le groupe constitué par les tensioactifs non ioniques comprenant des éthers de polyalkylène glycol, des propoxylates d'alcool gras, des alkylglucosides, des alkylpolyglucosides, des éthoxylates d'octylphénol et des éthoxylates de nonylphénol.

4. Utilisation selon l'une des revendications précédentes, **caractérisée en ce que** le tensioactif amphotère est choisi dans le groupe constitué par les tensioactifs amphotères comprenant des bétaïnes et des sultaïnes.

5. Utilisation selon l'une des revendications précédentes, **caractérisée en ce que** l'agent comporte un pigment absorbant la lumière UV.

6. Utilisation de l'agent selon l'une des revendications précédentes comme agent d'enrobage, **caractérisée par** une matrice contenant l'agent destiné à repousser les escargots et les limaces.

7. Utilisation selon la revendication 6, **caractérisée en ce que** la matrice est à base d'huile.

8. Utilisation selon l'une des revendications 7, **caractérisée en ce que** la matrice est un vernis à base d'huile.

9. Objet doté d'un enrobage présentant une combinaison de tensioactifs anionique, non ionique et amphotère non toxique pour des gastéropodes, dans un rapport en poids de 0,2 à 2,2 de tensioactif anionique à 0,1 à 1,5 de tensioactif non ionique à 0,1 à 2,2 de tensioactif amphotère, l'objet étant destiné à repousser les escargots et les limaces.

10. Objet selon la revendication 9, **caractérisé en ce qu'**il est une clôture anti-limace, un anneau-stop limaces, une bordure, un élément de bordure de jardin, un bac à plantes, un bac à compost ou un pot de fleurs.
